# EUROPÄISCHE PATENTSCHRIFT

(11) **EP 2 920 494 B1**
(45) Veröffentlichungstag und Bekanntmachung des Hinweises auf die Patenterteilung: **20.02.2019**
(21) Anmeldenummer: 13780096.7
(22) Anmeldetag: 10.10.2013
(51) Int. Cl.: F16H 63/18, F16H 63/30, F16D 11/00

(54) **GETRIEBESCHALTEINRICHTUNG**
GEAR SHIFTING SYSTEM
SYSTÈME DE CHANGEMENT DE VITESSES

(30) Priorität: 19.11.2012 DE 102012221065
(43) Veröffentlichungstag der Anmeldung: 23.09.2015
(73) Patentinhaber: ZF Friedrichshafen AG, 88046 Friedrichshafen (DE)
(72) Erfinder: VOLPERT, Bastian, 88048 Friedrichshafen (DE)
(86) Internationale Anmeldenummer: PCT/EP2013/071180
(87) Internationale Veröffentlichungsnummer: WO 2014/075856

(56) Entgegenhaltungen:
- WO-A1-2011/072945
- WO-A1-2012/055386
- DE-A1- 19 627 980
- DE-A1-102009 002 661

## Beschreibung

Die Erfindung betrifft eine Getriebeschalteinrichtung, umfassend ein erstes, rotativ antreibbares Getriebebauteil, auf welchem drehfest und axial verschiebbar ein Schaltelement angeordnet ist, das axial in zumindest eine Schaltstellung bewegbar ist, in welcher jeweils das erste Getriebebauteil mit je einem benachbart zu diesem angeordneten und hieran anbindbaren Getriebebauteil drehfest gekoppelt ist, wobei eine jeweilige, axiale Schaltbewegung des Schaltelements in die zumindest eine Schaltstellung und/oder aus dieser heraus durch Zusammenspiel jeweils eines Schaltstifts mit jeweils mindestens einer zugehörigen, nutartigen Schaltkulisse auslösbar ist, die in axialer Richtung zumindest abschnittsweise veränderlich gestaltet ist, wobei das Schaltelement von einem weiteren Getriebebauteil, bei welchem es sich um ein Gehäuse des Getriebes handelt, radial umgeben ist.

Getriebeschalteinrichtungen kommen bei Stufengetrieben zur Anwendung, um Getriebebauteile des jeweiligen Getriebes zur Darstellung je eines zugehörigen Übersetzungsverhältnisses drehfest miteinander zu koppeln. Dabei ist einer Getriebeschalteinrichtung zumeist ein Schaltelement zugeordnet, das, je nach konkreter Ausgestaltung, eine kraft- oder formschlüssige Koppelung der jeweils zugeordneten Getriebebauteile bei Betätigung vornimmt. Das jeweilige Schaltelement ist dabei dann üblicherweise drehfest und axial verschiebbar auf einem der beiden drehfest zu verbindenden Getriebebauteile vorgesehen und wird mittels einer Aktuatorik axial in eine jeweilige Schaltstellung verschoben, in welcher die gewünschte, drehfeste Koppelung unter vorherigem Abbau einer eventuell vorherrschenden Drehzahldifferenz zwischen den beide Getriebebauteilen verwirklich ist. Je nach konkreter Ausgestaltung dieser Aktuatorik kann eine derartige axiale Schaltbewegung des jeweiligen Schaltelements dabei mechanisch, hydraulisch, pneumatisch, elektrisch oder auch durch Mischformen eingeleitet werden.

Aus der WO2011072945A1, welche alle Merkmale des Oberbegriffs des Anspruchs 1 offenbart, geht eine Schalteinrichtung für ein Zahnräderwechselgetriebe, mit mindestens einer Schiebemuffe, welche drehfest und axial verschiebbar auf einer Getriebewelle aufgesetzt ist, hervor. Zur Schiebemuffe ist zumindest auf einer Seite ein Losrad benachbart platziert, das frei rotierbar auf der Getriebewelle angeordnet ist.

Zur Koppelung des Losrades mit der Getriebewelle wird die Schiebemuffe durch Betätigung von zugehörigen Stellmitteln aus einer Neutralstellung axial in Richtung des je einen Losrades in eine Schaltstellung bewegt.

Aus der WO2012055386A1 geht eine Schaltvorrichtung für ein Schaltgetriebe eines Fahrzeugs hervor, bei welchem ein Schaltelement ein Formschlusselement zur Erzeugung einer kraft- und drehmomentübertragenden Verbindung axial längs einer Längsache der Getriebewelle verschiebt.

Aus der DE 196 27 980 A1 geht eine Getriebeschalteinrichtung eines automatisierten Schaltgetriebes hervor, über welche ein erstes, rotativ antreibbares Getriebebauteil in Form einer Getriebewelle mit mehreren benachbart liegenden Getriebebauteilen jeweils gekoppelt werden kann. Vorliegend handelt es sich bei diesen weiteren Getriebebauteilen jeweils um Zahnräder, die drehbar auf dieser gelagert sind. Zudem sind auf der Getriebewelle mehrere Schaltelemente in Form von Schaltmuffen drehfest und axial verschiebbar angeordnet, wobei sich jede der Schiebemuffen aus je einem ringförmigen Körper zusammensetzt, welcher an einem Innenumfang mit einer axial verlaufenden Verzahnung versehen und über diese Verzahnung auf einer korrespondierenden Verzahnung seitens der radial innenliegenden Getriebewelle geführt ist.

Jede der Schiebemuffen kann nun jeweils axial zwischen je einer Neutralstellung, in welcher die jeweilige Schiebemuffe keines der beiden axial beiderseits liegenden Zahnräder mit der Getriebewelle koppelt, und je zwei Schaltstellungen bewegt werden, in welchen jeweils die Getriebewelle mit je einem Zahnräder unter einem vorherigen Abbau einer Differenzdrehzahl drehfest gekoppelt ist. Die axialen Schaltbewegungen der einzelnen Schiebemuffe werden vorliegend dabei über einen Elektromotor, zwischenliegende Übersetzungsstufen, sowie eine Schaltwalze im Zusammenspiel mit je einer der einzelnen Schiebemuffe zugeordneten Schaltgabel dargestellt. Hierbei wird über den Elektromotor mittels der zwischenliegenden Übersetzungsstufen einerseits ein Öffnen einer der Getriebewelle vorgeschalteten Trennkupplung und andererseits zeitgleich ein entsprechendes Verdrehen der Schaltwalze hervorgerufen.

Die Schaltwalze ist an einer radialen Außenseite mit nutartigen Schaltkulissen versehen, die in axialer Richtung jeweils zumindest abschnittsweise veränderlich gestaltet sind und in denen je ein Schaltstift der jeweiligen Schaltgabel läuft. Wird also die Schaltwalze über den Elektromotor mittels der zwischenliegenden Übersetzungsstufen in Drehbewegung versetzt, so ruft der in axialer Richtung veränderliche Verlauf der jeweiligen Schaltkulisse über den darin laufenden Schaltstift eine axiale Schiebebewegung der jeweiligen Schaltgabel hervor, was in eine entsprechende, axiale Verschiebung der je zugehörigen Schaltmuffe auf der Getriebewelle umgesetzt wird. In der Folge wird die jeweilige Schaltmuffe damit zwischen ihrer jeweiligen Neutralstellung und eine der möglichen Schaltstellungen axial bewegt. Die Schaltkulissen an der Schaltwalze sind dabei jeweils in axialer Richtung derartig veränderlich gestaltet, dass bei stetiger, über den Elektromotor eingeleiteter Drehbewegung ein aufeinanderfolgendes Schalten der einzelnen Gänge des automatisierten Schaltgetriebes bei jeweils geöffneter Trennkupplung stattfindet.

Ausgehend vom vorstehend beschriebenen Stand der Technik ist es nun die Aufgabe der vorliegenden Erfindung, eine Getriebeschalteinrichtung zur Verfügung zu stellen, über welche zumindest eine Schaltbewegung eines Schaltelements zur drehfesten Koppelung und/oder zur Trennung zweier ansonsten relativ zueinander verdrehbarer Getriebebauteile bei kompakten Aufbau realisiert werden kann.

Diese Aufgabe wird ausgehend vom Oberbegriff des Anspruchs 1 in Verbindung mit dessen kennzeichnenden Merkmalen gelöst. Der hierauf folgende, abhängige Anspruch gibt eine vorteilhafte Weiterbildung der Erfindung wieder.

Gemäß der Erfindung umfasst eine Getriebeschalteinrichtung ein erstes, rotativ antreibbares Getriebebauteil, auf welchem drehfest und axial verschiebbar ein Schaltelement angeordnet ist, das axial in zumindest eine Schaltstellung bewegt werden kann. In dieser zumindest einen Schaltstellung ist das erste Getriebebauteil dabei mit je einem hieran anbindbaren Getriebebauteil drehfest gekoppelt, welches benachbart zu dem ersten Getriebebauteil angeordnet und ansonsten relativ zu diesem verdrehbar ist. Zudem ist eine jeweilige, axiale Schaltbewegung des Schaltelements in die zumindest einen Schaltstellung und/oder aus dieser heraus durch Zusammenspiel jeweils eines Schaltstifts mit jeweils mindestens einer zugehörigen, nutartigen Schaltkulisse auslösbar, die in axialer Richtung zumindest abschnittsweise veränderlich gestaltet ist, wobei das Schaltelement von einem weiteren Getriebebauteil, bei welchem es sich um ein Gehäuse des Getriebes handelt, radial umgeben ist.

Im Sinne der Erfindung ist unter einem Getriebebauteil generell ein rotierbares oder auch feststehendes Bauteil des Getriebes zu verstehen, wie beispielsweise eine Getriebewelle, ein Zahnrad, ein Gehäuse oder ein Gehäuseteil, etc.. Insbesondere ist das jeweilige Getriebebauteil dabei, zumindest bei Schalten einzelner Gänge des Getriebes, an einer Leistungsübertragung zwischen einer Antriebs- und einer Abtriebsseite des Getriebes beteiligt. Während es sich bei dem ersten Getriebebauteil zwingend um ein rotativ antreibbares Getriebebauteil, wie eine Getriebewelle oder ein Zahnrad einer Übersetzungsstufe, handeln muss, kann das benachbart zu diesem liegende, hieran anbindbare Getriebebauteil erfindungsgemäß entweder ebenfalls als ein rotativ antreibbares Getriebebauteil ausgeführt sein, also beispielsweise als Getriebewelle oder als drehbar gelagertes Stirnrad, oder aber auch als feststehendes Bauteil in Form eines Getriebegehäuses oder eines Getriebegehäuseteils vorliegen. Im Fall der ersten Variante rotieren die beiden Getriebebauteile dann nach der drehfesten Koppelung gemeinsam, während im zweitgenannten Fall das erste Getriebebauteil bei drehfester Verbindung mit dem anbindbaren Getriebebauteil an diesem festgesetzt wird.

Das Schaltelement kann im Sinne der Erfindung hierbei direkt an der drehfesten Verbindung des ersten Getriebebauteils mit dem anbindbaren Getriebebauteil beteiligt sein, indem es bei seiner axialen Verschiebung in die jeweilige Schaltstellung selbst mit dem anbindbaren Getriebebauteil in Verbindung tritt, also selbst ein Drehmoment von dem ersten Getriebebauteil auf das anbindbare Getriebebauteil überträgt. Hierbei kann das anbindbare Getriebebauteil zur drehfesten Koppelung mit einem zusätzlichen Bauteil, beispielsweise in Form eines Kupplungskörpers, versehen sein, mit welchem das Schaltelement des ersten Getriebebauteils bei seiner Überführung in die Schaltstellung drehfest in Kontakt tritt. Alternativ dazu kann das weitere, anbindbare Getriebebauteil aber auch mit einem eigenen Schaltelement versehen sein, welches ebenfalls drehfest und axial verschiebbar auf Seiten des anbindbaren Getriebebauteils vorgesehen ist und zur drehfesten Koppelung der beiden Getriebebauteile zeitgleich mit dem, seitens des ersten Getriebebauteils vorgesehenen Schaltelements in eine zugehörige Schaltstellung zu bewegen ist, in welcher es dann mit dem Schaltelement des ersten Getriebebauteils drehfest gekoppelt wird.

Schließlich kann die erfindungsgemäße Getriebeschalteinrichtung entweder als einfache Schalteinrichtung ausgeführt sein, bei welcher das zugehörige Schaltelement aus einer Neutralstellung nur in eine Schaltstellung bewegt werden kann, oder aber auch als Doppelschalteinrichtung realisiert sein, bei welcher das zugehörige Schaltelement aus der Neutralstellung heraus axial sowohl in eine erste Richtung als auch in eine zweite Richtung in jeweils eine Schaltstellung verschoben werden kann und hierbei eine drehfeste Kopplung des ersten Getriebebauteils mit jeweils einem benachbart liegenden, anbindbaren Getriebebauteil vornimmt. Des Weiteren ist auch eine Ausgestaltung im Rahmen der Erfindung denkbar, bei welcher lediglich zwischen zwei Schaltstellungen gewechselt werden kann, also keine Neutralstellung des Schaltelements möglich ist.

Erfindungsgemäß weist ein Schaltelement einer Getriebeschalteinrichtung einen ringförmigen Körper auf, welcher an einem Innenumfang mit einer axial verlaufenden Verzahnung versehen ist, über die der Körper drehfest und axial verschiebbar über eine korrespondierende Verzahnung auf einem radial innenliegenden Getriebebauteil geführt werden kann. Besonders bevorzugt bildet der ringförmige Körper einen Kreisring und ist durch ein einziges Element gebildet, wobei im Rahmen der Erfindung auch ein Zusammensetzen des Körpers aus mehreren Einzelteilen prinzipiell denkbar ist. Diese Einzelteile sind dann zumindest drehfest miteinander zu verbinden.

Prinzipiell kann das erfindungsgemäße Schaltelement des Weiteren derartig ausgestaltet sein, dass es in einer Getriebeschalteinrichtung bei axialer Verschiebung in eine Schaltstellung eine formschlüssige oder eine kraftschlüssige Koppelung zweier Getriebebauteile hervorruft. So kann dieses Schaltelement als Klauenmuffe einer Klauenkupplung oder Klauenbremse, als Schiebemuffe einer Sperrsynchronisation, oder ähnlich aufgebautes Bauteil ausgeführt sein, welches nach Abbau einer eventuell vorhandenen Differenzdrehzahl zwischen den beiden Getriebebauteilen die formschlüssige Koppelung vornimmt. Ein Abbau einer Differenzdrehzahl kann dabei entweder rein durch einen Zahneingriff des Schaltelements mit einem seitens des Weiteren Getriebebauteils vorgesehenen Element bewerkstelligt oder mithilfe zwischenliegender Bauteile, wie Synchronringe, hervorgerufen werden. Zudem kann es sich bei dem Schaltelement auch um einen Kolbenschieber handeln, welcher bei Verschiebung Kupplungshälften einer kraftschlüssigen Kupplung oder Bremse, wie einer Lamellenkupplung bzw. - bremse, zusammendrückt.

Die Erfindung umfasst nun die technische Lehre, dass das Schaltelement an seine Innendurchmesser und an seinem Außendurchmesser die mindestens eine zugehörige Schaltkulisse aufweist, während der jeweils eine Schaltstift radial verschiebbar und der mindestens einen Schaltkulisse radial gegenüberliegend an einem benachbart zum Schaltelement liegenden Getriebebauteil, dem anbindbaren und dem weiteren Getriebebauteil angeordnet ist. Alternativ dazu nimmt das Schaltelement an einem radialen Innendurchmesser und an seinem radialen Außendurchmesser den jeweils einen Schaltstift radial verschiebbar auf, wohingegen die mindestens eine zugehörige Schaltkulisse dem jeweils einen Schaltstift radial gegenüberliegend an einem benachbart zum Schaltelement liegenden Getriebebauteil, dem anbindbaren und dem weiteren Getriebebauteil ausgestaltet ist. Ferner kann der jeweils eine Schaltstift über einen zugehörigen Aktuator jeweils radial zwischen einer Grundstellung und einer Eingriffsstellung bewegt werden, in welcher er in die mindestens eine zugehörige Schaltkulisse eingeführt werden kann.

Mit anderen Worten sind also der jeweils eine Schaltstift und die mindestens eine zugehörige, nutartige Schaltkulisse radial gegenüberliegend zwischen dem Schaltelement und einem hierzu benachbart liegenden Getriebebauteil vorgesehen. Zum einen kann eines dieser beiden Bauteile, also entweder der Schaltstift oder die Schaltkulisse, hierbei an einem Innendurchmesser oder an einem Außendurchmesser des Schaltelements vorgesehen sein, wobei das jeweils andere Element dann umgekehrt hierzu an einer radialen Außenseite oder einer radialen Innenseite des benachbart liegenden Getriebebauteils platziert ist. Werden verschiedene axiale Schaltbewegungen des Schaltelements durch ein derartiges Zusammenspiel je eines Schaltstifts mit mindestens einer zugehörigen Schaltkulisse eingeleitet, so können seitens des Schaltelements und eines oder verschiedener radial benachbarter Getriebebauteile mehrere aus je einem Schaltstift und je einer Schaltkulisse gebildete Paare vorgesehen sein. Bei mehreren derartigen Paaren sind verschiedene Kombinationen denkbar, bei welchen das Schaltelement an seinem Innendurchmesser und/oder auch an seinem Außendurchmesser mehrere Schaltstifte, mehrere Schaltkulissen oder mindestens einen Schaltstift und mindestens eine Schaltkulisse aufnimmt. Die diesen hierbei jeweils gegenüberliegenden Elemente können hierbei an nur einem benachbart liegenden Getriebebauteil oder aber auch an unterschiedlichen, benachbart liegenden Getriebebauteilen vorgesehen sein, müssen aber zwingend radial gegenüberliegend ausgestaltet sein.

Die jeweils zugehörige axiale Schaltbewegung wird dabei dadurch ausgelöst, dass der jeweilige, über einen zugehörigen Aktuator radial bewegliche Schaltstift in die mindestens eine zugehörige Schaltkulisse eingeführt wird, so dass entsprechend des in axialer Richtung veränderlichen Verlaufs der Schaltkulisse eine axiale Verschiebung des Schaltelements relativ zu dem benachbart liegenden Getriebebauteil hervorgerufen wird. Da diese axiale Schaltbewegung erst bei radialer Verschiebung des jeweiligen Schaltstifts aus der Grundstellung in die Eingriffsstellung stattfindet, kann diese axiale Schaltbewegung des Schaltelements gezielt über den Aktuator eingeleitet werden. Gleichzeitig ist die Anordnung des Schaltstifts mit Aktuator und das Vorsehen der Schaltkulisse auf kompakte Art und Weise möglich. Bevorzugt handelt es sich bei dem Aktuator dabei um einen elektrischen Aktuator, so dass im Vergleich zu einer mechanischen oder auch einer hydraulischen Aktuatorik eine Steuerung des Schaltelements bei geringem Gewicht und geringem Bauraumbedarf möglich ist. Insgesamt lässt sich die erfindungsgemäße Getriebeschalteinrichtung damit platzsparend im Bereich eines Getriebes realisieren, wobei hierbei auch mehrere Schaltelemente jeweils über je eine derartig gestaltete Getriebeschalteinrichtung problemlos unabhängig voneinander gesteuert werden können.

Im Unterschied hierzu laufen bei der DE 196 27 980 A1 die jeweils seitens der Schaltgabeln vorgesehenen Schaltstifte permanent in den je zugehörigen Schaltkulissen, die auf einer radialen Außenseite der Schaltwalze ausgestaltet sind. Infolge dessen kann das einzelne Schaltelement nicht individuell aus einer Neutralstellung in eine Schaltstellung verschoben werden, da axiale Schaltbewegungen der Schaltelemente stets starr entsprechend der Verdrehung der Schaltwalze und der jeweiligen Gestaltung der Schaltkulissen vorgenommen wird. Ein Schalten der Gangstufen des automatisierten Kraftfahrzeuggetriebes der DE 196 27 980 A1 erfolgt also entsprechend einer starr vorgegebenen Schaltabfolge, so dass beispielsweise ein Überspringen eines oder mehrerer Gänge nicht möglich ist. Damit ist dieser Aufbau nur für die Verwendung bei einem automatisierten Schaltgetriebe geeignet. Ferner setzt die Unterbringung der aus Elektromotor, Übersetzungsstufen und Schaltwalze gebildeten Aktuatorik einen entsprechenden Bauraum voraus, so dass eine kompakte Betätigung der Schaltelemente im Falle der DE 196 27 980 A1 nicht möglich ist.

Dem Fachmann wird vorliegend klar sein, dass es bei der erfindungsgemäßen Getriebeschalteinrichtung zur Einleitung einer axialen Bewegung des Schaltelements bis zu dessen Überführung in die zumindest eine Schaltstellung stets einer Relativdrehzahl zwischen dem den Schaltstift tragenden Bauteil und dem mit der nutartigen Schaltkulisse versehenen Bauteil bedarf, da ansonsten das Einfassen des Schaltstifts in die zugehörige Schaltkulisse nicht in eine axiale Schiebebewegung umgesetzt wird. Dies hat zur Folge, dass eine Schaltbewegung des Schaltelements bei Stillstehen des ersten Getriebebauteils nicht vollzogen werden kann, sofern nicht gerade das gegenüberliegende Getriebebauteil, welches entweder den jeweils einen Schaltstift oder die mindestens eine, zugehörige Schaltkulisse aufweist, eine Drehbewegung ausführt. Des Weiteren ist eine erfindungsgemäße Getriebeschalteinrichtung bei einem Kraftfahrzeuggetriebe zumindest bei Anfahrgängen antriebsseitig vorzusehen, da zu Beginn eines Anfahrvorganges des Kraftfahrzeuges sich eine Abtriebsseite des jeweiligen Kraftfahrzeuggetriebes im Stillstand befindet. Generell ist eine erfindungsgemäße Getriebeschalteinrichtung aber ansonsten bei sämtlichen Stufengetrieben und hierbei insbesondere bei Kraftfahrzeuggetrieben problemlos anwendbar.

Entsprechend einer Ausführungsform der Erfindung ist das Schaltelement zum einen am Außendurchmesser mit einer ersten Schaltkulisse versehen, welcher ein erster, seitens eines umliegenden Gehäuses vorgesehener Schaltstift radial gegenüberliegt. Zum anderen weist das Schaltelement am Innendurchmesser eine zweite Schaltkulisse auf, der seitens des je einen anbindbaren Getriebebauteils ein zweiter Schaltstift radial gegenüberliegend aufgenommen ist. Dabei wird durch Einfassen des zweiten Schaltstifts in die zweite Schaltkulisse eine axiale Schaltbewegung des Schaltelements in eine das erste Getriebebauteil mit dem je einen anbindbaren Getriebebauteil koppelnde Schaltstellung hervorgerufen, wohingegen mittels Einführen des ersten Schaltstifts in die erste Schaltkulisse eine axiale Schaltbewegung des Schaltelements zurück in eine Neutralstellung darstellbar ist. Mit anderen Worten ist das Schaltelement also mit zwei Schaltkulissen versehen, von denen eine am Außendurchmesser ausgestaltet ist und mit einem seitens eines Gehäuses vorgesehenen Schaltstift zur Überführung des Schaltelements in seine Neutralstellung zusammenwirken kann, wohingegen die andere Schaltkulisse am Innendurchmesser des Schaltelements ausgebildet ist und im Zusammenspiel mit einem auf Seiten des anbindbaren Getriebebauteils angeordneten Schaltstifts eine Überführung des Schaltelements in eine Schaltstellung darstellt.

Eine derartige Ausgestaltung hat hierbei den Vorteil, dass über die Schaltstifte und die je zugehörigen Schaltkulissen die axialen Schaltbewegungen des Schaltelements zwischen einer Neutralstellung und einer Schaltstellung, in welcher das erste Getriebebauteil mit dem anbindbaren Getriebebauteil drehfest gekoppelt ist, gesteuert werden können. Durch die Anordnung des zweiten Schaltstifts und der zweiten Schaltkulisse zwischen dem Schaltelement und dem anbindbaren Getriebebauteil ist es zudem möglich, die axiale Schaltbewegung des Schaltelements in seine Schaltstellung in Relation zu einer Position und gegebenenfalls einer Bewegung des anbindbaren Getriebebauteils zu gestalten. Denn die Art des Verlaufs der zweiten Schaltkulisse in axialer Richtung definiert das Maß, mit welchem bei Einfassen des zweiten Schaltstifts eine relative, in Umfangsrichtung orientierte Bewegung zwischen Schaltkulisse und Schaltstift in eine axiale Schiebebewegung des Schaltelements umgesetzt wird. So kann beispielsweise ein sauberes Einspuren zweier Verzahnungen definiert werden, indem das Schaltelement derartig in die Schaltstellung verschoben wird, das die am Schaltelement ausgestalteten Zähne immer genau in Zahnzwischenräume der korrespondierenden Verzahnung einlaufen.

Hinsichtlich der zweiten Schaltkulisse ist dabei ein Verlauf in axialer Richtung so zu gestalten, dass stets eine vollständige Überführung des Schaltelements in seine Schaltstellung bis zur drehfesten Koppelung des ersten Getriebebauteils und des anbindbaren Getriebebauteils vollzogen werden kann. Da nämlich der zweite Schaltstift und die zweite Schaltkulisse zwischen dem Schaltelement und dem anbindbaren Getriebebauteil liegen, ist ab einer gemeinsamen Drehzahl der beiden zu koppelnden Getriebebauteile keine Relativbewegung mehr zwischen dem zweiten Schaltstift und der zweiten Schaltkulisse in Umfangsrichtung vorhanden, so dass über diese beiden Elemente auch keine axiale Bewegung des Schaltelements mehr erzwungen wird. Insbesondere ist die zweite Schaltkulisse hierbei so zu gestalten, dass ein in Umfangsrichtung orientierter Kraftanteil bei Einfassen des zweiten Schaltstifts nicht zu groß ausfällt und dadurch eine vorzeitige Drehzahlangleichung vor Erreichen der Schaltstellung des Schaltelements stattfindet. Ansonsten könnte nämlich das Problem auftreten, dass die beiden Getriebebauteile zwar mit gleicher Drehzahl laufen, aber noch nicht drehfest miteinander gekoppelt sind.

Bevorzugt ist dabei die erste Schaltkulisse derartig in den Außendurchmesser und die zweite Schaltkulisse in den Innendurchmesser des Schaltelements eingebracht, dass die beiden Schaltkulissen gegensätzlich zueinander verlaufen. Zudem geht jede Schaltkulisse an ihren jeweiligen beiden Enden jeweils über Übergangsbereiche stetig in den Außendurchmesser des Körpers über. Mittels der Übergangsbereiche kann der jeweilige Schaltstift auch dann in die zugehörige Schaltkulisse sauber einlaufen, wenn dieser Schaltstift und die Schaltkulisse zu Beginn der Überführung des Schaltstifts in die Eingriffsstellung in Umfangsrichtung zunächst nicht überdecken.

Beispielhaft ist das Schaltelement an zumindest einer axialen Stirnseite mit je einer axial vorstehenden, umlaufenden Klauenverzahnung versehen ist, welche dem je einen anbindbaren Getriebebauteil hierbei zugwendet ist. Ferner ist das je eine anbindbare Getriebebauteil drehfest mit je einem axial zwischen dem je einen anbindbaren Getriebebauteil und dem Schaltelement liegenden Kupplungskörper verbunden, welcher auf einer dem Schaltelement zugewandten Stirnseite mit je einer korrespondierend zur Klauenverzahnung des Schaltelements gestalteten Verzahnung versehen und mit dem anbindbaren Getriebebauteil über je ein zwischenliegendes Federelement axial beweglich gekoppelt ist. Die je eine Klauenverzahnung des Schaltelements und die je eine Verzahnung des Kupplungskörpers stehen in der zumindest einen Schaltstellung des Schaltelements miteinander im Zahneingriff. Das Schaltelement ist also in diesem Fall als Klauenmuffe ausgestaltet, die in der Schaltstellung eine formschlüssige Koppelung des ersten Getriebebauteils mit dem anbindbaren Getriebebauteil mittels Zahneingriff mit dem Kupplungskörper darstellt.

Eine Platzierung eines Federelements zwischen dem Kupplungskörper und dem anbindbaren Getriebebauteil hat hierbei den Vorteil, dass ein eventuell bei Zahneingriff des Schaltelements mit dem Kupplungskörper auftretender Stoß nicht auf das weitere Getriebebauteil übertragen, sondern über das zwischenliegende Federelement kompensiert wird. Im Sinne der Erfindung kann eine am Schaltelement vorgesehene Verzahnung aber auch stirnseitig des Schaltelements auf einer radialen Außenseite ausgestaltet und damit nach Art einer Klauenaußenverzahnung gestaltet sein, wobei dann dementsprechend die hierzu korrespondierende Verzahnung seitens des Kupplungskörpers stirnseitig und an einem Innenumfang des Kupplungskörpers als Klaueninnenverzahnung vorzusehen ist. Zudem ist es prinzipiell im Rahmen der Erfindung denkbar, den Kupplungskörper nicht als separates und über ein Federelement mit dem weiteren Getriebebauteil gekoppeltes Element vorzusehen, sondern diesen starr mit dem weiteren Getriebebauteil zu verbinden oder aber auch das weitere Getriebebauteil direkt mit der entsprechenden Verzahnung zu versehen. Hierdurch wird dann entsprechend der Herstellungsaufwand vermindert, dann aber keine Stoßkompensation ermöglicht.

Der Kupplungskörper ist dabei insbesondere mit einem Körper ausgeführt, welcher drehfest mit dem anbindbaren Getriebebauteil verbunden werden kann. Zudem ist in eine radiale Außenseite oder eine radiale Innenseite des Körpers eine in axialer Richtung zumindest abschnittsweise veränderlich gestaltete Schaltkulisse eingebracht. Alternativ dazu führt der Körper des Kupplungskörpers an einer radialen Außenseite oder einer radialen Innenseite einen Schaltstift mit einem zugehörigen Aktuator. Ein derartig gestalteter Kupplungskörper ist dementsprechend mit einem der beiden Elemente versehen, über welche im Zusammenspiel eine axiale Schaltbewegung des Schaltelements eingeleitet werden kann. Somit kann auch bei Vorsehen eines Kupplungskörpers problemlos ein Schaltstift mit zugeordneter Schaltkulisse zwischen dem Schaltelement und dem anbindbaren Getriebebauteil vorgesehen und damit eine Schiebebewegung des Schaltelements in Relation zu einer Position und gegebenenfalls einer Bewegung des anbindbaren Getriebebauteils gesteuert werden. Insbesondere ist der Körper des Kupplungskörpers hierbei zylinderförmig gestaltet.

Beispielhaft ist die Ausführungsform einer Getriebeschalteinrichtung, bei welcher je ein Schaltstift-Schaltkulisse-Paar zwischen dem Schaltelement und dem Gehäuse, sowie dem Schaltelement und dem anbindbaren Getriebebauteil vorgesehen ist, mit einer Ausgestaltung einer Getriebeschalteinrichtung kombiniert, bei der ein Kupplungskörper auf Seiten des anbindbaren Getriebebauteils angeordnet ist. In Weiterbildung dieser Kombination sind der zweite Schaltstift und der diesem zugehörige Aktuator dabei dann an einer radialen Außenseite eines axial über die je eine Verzahnung vorstehenden Wellenstummels des Kupplungskörpers aufgenommen. Der Körper des Kupplungskörpers ist also zum einen mit einer axial vorstehenden Verzahnung versehen, wobei über diese Verzahnung ein Wellenstummel axial vorkragt, an dessen Außendurchmesser der Schaltstift mit zugehörigem Aktuator vorgesehen ist. Mittels einer derartigen Ausgestaltung kann einerseits die zur Klauenverzahnung korrespondierende Verzahnung und andererseits der Schaltstift mit Aktuator am Kupplungskörper platziert werden.

Radial zwischen dem Schaltelement und dem ersten Getriebebauteil kann bspw. eine Rastiereinrichtung vorgesehen sein, welche, abgesehen von axialen Schaltbewegungen, axiale Bewegungen des Schaltelements aus einer Neutralstellung und der zumindest einen Schaltstellung heraus verhindert. Mit anderen Worten nehmen also das Schaltelement und das erste Getriebebauteil zwischen sich eine Rastiereinrichtung auf, die axiale Bewegungen des Schaltelements, welche nicht durch Eingriff des jeweils einen Schaltstifts in die zugehörige Schaltkulisse hervorgerufen werden, unterbindet. Dies hat den Vorteil, dass der jeweils eine Schaltstift nach Überführung des Schaltelements in die zumindest eine Schaltstellung bzw. in die Neutralstellung nicht in der Schaltkulisse verbleiben muss, um das Schaltelement in dieser Stellung zu halten. Stattdessen sorgt die Rastiereinrichtung für einen Verbleib des Schaltelements in der gewünschten Stellung.

Die Rastiereinrichtung könnte weiterhin je eine Kugel umfassen, die seitens des ersten Getriebebauteils oder des Schaltelements radial beweglich geführt ist und mittels je eines Federelements gegen eine Rastierkontur vorgespannt ist. Hierbei ist die Rastierkontur radial gegenüberliegend der je einen Kugel an dem Schaltelement oder dem ersten Getriebebauteil ausgestaltet und gelangt sowohl in der Neutralstellung als auch in der zumindest einen Schaltstellung des Schaltelements jeweils mit je einer Rastiermulde axial in Überdeckung mit der je einen Kugel. Durch Ausführung der Rastiereinrichtung als Kugelrastierung kann die gewünschte Fixierung des Schaltelements in der Neutralstellung und auch in der zumindest einen Schaltstellung auf einfache Art und Weise realisiert werden. Es ist jedoch auch denkbar, eine Rastiereinrichtung zwischen dem Schaltelement und einem anderen Getriebebauteil, beispielsweise einem umliegenden Gehäuse, vorzusehen.

Bespielhaft handelt es sich bei dem ersten Getriebebauteil und auch bei dem je einen anbindbaren Getriebebauteil um je eine Getriebewelle. Folglich können diese beiden Getriebewellen über die erfindungsgemäße Getriebeschalteinrichtung drehfest miteinander gekoppelt werden.

Die Bezugnahme der Ansprüche auf die Zeichnungen durch Verwendung von Bezugszeichen soll den Schutzumfang der Ansprüche nicht beschränken.

Weitere, die Erfindung verbessernde Maßnahmen werden nachstehend gemeinsam mit der Beschreibung einer bevorzugten Ausführungsform der Erfindung näher dargestellt, welche Bezug auf die in den Figuren dargestellten Zeichnungen nimmt. Es zeigen:

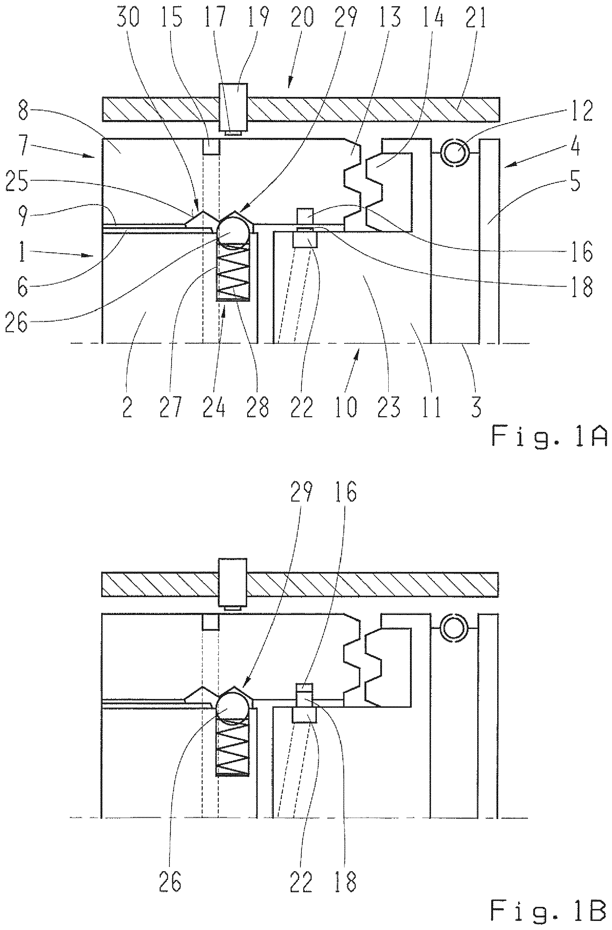

- Fig. 1A bis 1F: schematische Ansichten einer Getriebeschalteinrichtung gemäß einer bevorzugten Ausführungsform der Erfindung, gezeigt in unterschiedlichen Schaltzuständen der Getriebeschalteinrichtung.

Aus den Fig. 1A bis 1F geht jeweils eine schematische Ansicht einer Getriebeschalteinrichtung gemäß einer bevorzugten Ausführungsform der Erfindung hervor, wobei über die Fig. 1A bis 1F hierbei einzelne Schaltzustände dieser Getriebeschalteinrichtung dargestellt sind. Im Folgenden soll nun zunächst der erfindungsgemäße Aufbau der Getriebeschalteinrichtung anhand der Fig. 1A beschrieben werden:

Bei der in Fig. 1A dargestellten Getriebeschalteinrichtung handelt es sich um eine Schalteinrichtung eines Stufengetriebes, beispielsweise eines automatisierten PKW-Getriebes. Dabei umfasst diese Getriebeschalteinrichtung ein erstes Getriebebauteil 1, welches vorliegend als Getriebewelle 2 ausgeführt ist und um eine Rotationsachse 3 rotieren kann. Axial benachbart zu dem ersten Getriebebauteil 1 ist ein weiteres Getriebebauteil 4 vorgesehen, welches vorliegend ebenfalls als um die Rotationsachse 3 rotierbar gelagerte und damit koaxial zur Getriebewelle 2 verlaufende Getriebewelle 5 ausgestaltet ist. Die Getriebewelle 2 und die Getriebewelle 5 können nun über die erfindungsgemäße Getriebeschalteinrichtung drehfest miteinander gekoppelt werden.

Wie des Weiteren aus der Fig. 1A zu erkennen ist, weist die Getriebewelle 2 in dem in Fig. 1A dargestellten Bereich auf einer radialen Außenseite eine Mitnahmeverzahnung 6 auf, über welche ein radial außen auf die Getriebewelle 2 aufgesetztes Schaltelement 7 drehfest und axial verschiebbar geführt ist. Dieses Schaltelement 7 ist hierbei aus einem ringförmigen, einstückigen Körper 8 gebildet, der an einem Innenumfang mit einer zur Mitnahmeverzahnung 6 korrespondierenden Verzahnung 9 versehen ist. Die drehfeste Anordnung des Schaltelements 7 auf der Getriebewelle 2 bei gleichzeitiger axialer Verschiebbarkeit wird dabei durch den jeweils in axialer Richtung orientierten Verlauf der Zähne der Mitnahmeverzahnung 6 und der Verzahnung 9 verwirklicht.

Axial zwischen der Getriebewelle 2 und dem Schaltelement 7 einerseits und der Getriebewelle 5 andererseits ist zudem ein Kupplungskörper 10 vorgesehen, welcher mit einem im Wesentlichen zylindrischen Körper 11 ebenfalls auf der Rotationsachse 3 angeordnet und mit der Getriebewelle 5 gekoppelt ist. Diese Koppelung ist vorliegend dabei über eine - vorliegend nicht weiter dargestellte - Mitnahmeverzahnung zwischen Kupplungskörper 10 und Getriebewelle 5 gestaltet und lässt bei drehfester Verbindung zwischen diesen beiden Bauteilen axiale Bewegungen des Kupplungskörpers 10 gegenüber der Getriebewelle 5 zu. Allerdings werden axiale Bewegungen hierbei über ein Federelement 12 begrenzt, welches axial zwischen der Getriebewelle 5 und dem Kupplungskörper 10 platziert ist und den Kupplungskörper axial in Richtung des Schaltelements 7 vorspannt.

Das Schaltelement 7 ist des Weiteren auf einer der Getriebewelle 5 zugewandten Stirnseite mit einer Klauenverzahnung 13 versehen, deren Zähne hierbei axial in Richtung des Kupplungskörpers 10 vorstehen und umlaufend am Schaltelement 7 ausgebildet sind. Seitens des Kupplungskörpers 10 liegt der Klauenverzahnung 13 dabei eine Verzahnung 14 gegenüber, die sich ausgehend vom zylindrischen Körper 11 axial vorstehenden in Richtung des Schaltelements 7 erstreckt und korrespondierend zu der Klauenverzahnung 13 des Schaltelements 7 gestaltet ist. Bei Bewegung des Schaltelements 7 aus einer, in Fig. 1A zu sehenden Neutralstellung in eine Schaltstellung werden die Klauenverzahnung 13 und die hierzu korrespondierende Verzahnung 14 miteinander in Eingriff gebracht, so dass in der Folge das Schaltelement 7 formschlüssig mit dem Kupplungskörper und damit auch die Getriebewelle 2 mit der Getriebewelle 5 verbunden wird.

Zur gezielten Einleitung der axialen Bewegungen des Schaltelements 7 zwischen seiner Neutralstellung und der Schaltstellung, ist das Schaltelement 7 zum einen an einem Außendurchmesser seines Körpers 8 mit einer ersten Schaltkulisse 15 und zum anderen an einem Innendurchmesser, in Verlängerung der Verzahnung 9 mit einer zweiten Schaltkulisse 16 versehen, welche jeweils im Zusammenspiel mit je einem zugehörigen Schaltstift 17 bzw. 18 gezielt die jeweilige axiale Verschiebung des Schaltelements 7 einleiten können. Ein erster Schaltstift 17 ist dabei gemeinsam mit einem zugehörigen Aktuator 19 durch ein zum Schaltelement 7 radial benachbart liegenden Getriebebauteil 20 aufgenommen, bei welchem es sich vorliegend um ein das Schaltelement 7 radial umgebendes Gehäuse 21 des Getriebes handelt. Hingegen ist ein zweiter Schaltstift 18 dadurch der zweiten Schaltkulisse 16 radial gegenüberliegend vorgesehen, indem er gemeinsam mit einem Aktuator 22 an einem Außendurchmesser eines Wellenstummels 23 platziert ist, welcher sich ausgehend von dem die Verzahnung 14 tragenden Teil des Körpers 11 in Richtung der Getriebewelle 2 erstreckt und dabei axial über die Verzahnung 14 vorkragt.

Die Schaltstifte 17 und 18 können jeweils über den je zugeordneten Aktuator 19 bzw. 22 aus einer, in Fig. 1A dargestellten Grundstellung in eine jeweilige Eingriffsstellung verschoben werden, in welcher der jeweilige Schaltstift 17 bzw. 18 dann in die je zugehörige Schaltkulisse 15 bzw. 16 radial einfassen kann. Hierbei ist der jeweilige Schaltstift 17 bzw. 18 radial verschiebbar in dem je zugehörigen Aktuator 19 bzw. 22 aufgenommen. Die beiden Aktuatoren 19 und 22 sind dabei als elektrische Aktuatoren ausgeführt, die bei entsprechender Bestromung jeweils die jeweilige radiale Bewegung des zugehörigen Schaltstifts 17 bzw. 18 einleiten.

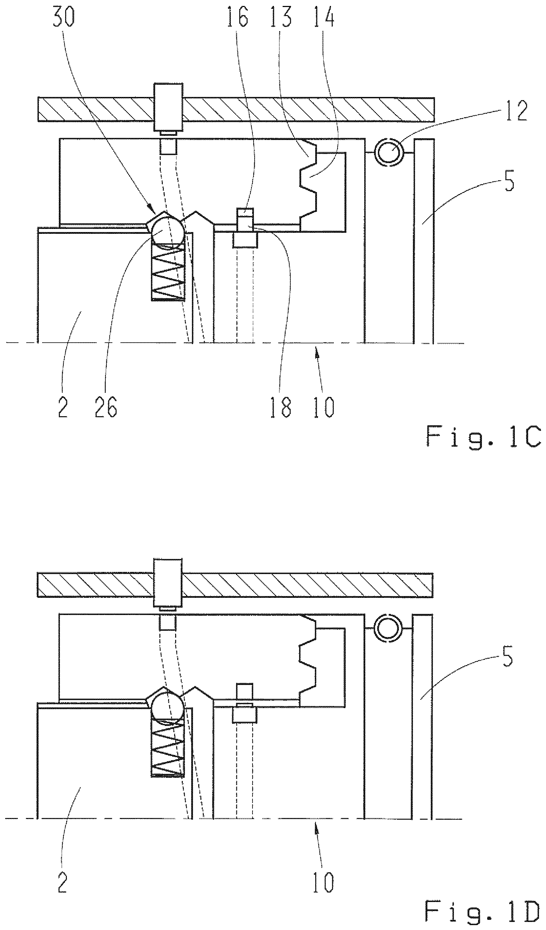

Wie hinsichtlich der Schaltkulisse 16 zum Beispielaus Fig. 1A und hinsichtlich der Schaltkulisse 15 beispielsweise aus Fig. 1C anhand des jeweils gestrichelten Verlaufs zu erkennen ist, sind die Schaltkulissen 15 und 16 in axialer Richtung abschnittsweise veränderlich gestaltet, wobei die Verläufe der Schaltkulissen 15 und 16 dabei jeweils einen spiralförmigen Charakter aufweisen. Zudem sind diese Verläufe der Schaltkulissen 15 und 16 gegensätzlich zueinander gestaltet, so dass jeweils im Zusammenspiel mit dem je zugehörigen Schaltstift 17 bzw. 18 die gegensätzlich zueinander orientierten Schaltbewegungen des Schaltelements 7 realisiert werden können.

Zudem ist sowohl die erste Schaltkulisse 15 als auch die zweite Schaltkulisse 16 mit je einem - vorliegend nicht weiter dargestellten - eingangsseitigen Übergangsbereich ausgestattet, über welchen bei der ersten Schaltkulisse 15 der Außendurchmesser und im Falle der zweiten Schaltkulisse 16 der Innendurchmesser des Körpers 8 in die jeweilige, jeweils nutartig gestaltete Schaltkulisse 15 bzw. 16 übergeht. An einem hierzu jeweils entgegengesetzten Ende ist ferner ein ausgangsseitiger Übergangsbereich vorgesehen, der vorliegend ebenfalls nicht dargestellt ist und über welchen die jeweilige Schaltkulisse 15 bzw. 16 wieder auf den Außen- bzw. Innendurchmesser des ringförmigen Körpers 8 ausläuft. Hierbei liegt in der Neutralstellung des Schaltelements 7 der eingangsseitige Übergangsbereich der zweiten Schaltkulisse 16 axial auf Höhe des zweiten Schaltstifts 18, während der ausgangsseitige Übergangsbereich der ersten Schaltkulisse 15 axial mit dem ersten Schaltstift 17 überdeckt. In der Schaltstellung des Schaltelements 7 liegen hierzu umgekehrt der ausgangsseitige Übergangsbereich der zweiten Schaltkulisse 16 und der zweite Schaltstift 18 axial auf einer Höhe, wohingegen der eingangsseitige Übergangsbereich der ersten Schaltkulisse 15 axial mit dem ersten Schaltstift 17 überdeckt.

Des Weiteren ist radial zwischen der Getriebewelle 2 und dem Schaltelement 7 eine Rastiereinrichtung 24 vorgesehen, die sich aus einer Rastierkontur 25 und einer hieran ablaufenden Kugel 26 zusammensetzt. Die Kugel 26 ist auf Seiten der Getriebewelle 2 radial beweglich in einer Bohrung 27 geführt und mittels eines Federelements 28 gegen die Rastierkontur 25 vorgespannt, welche auf dem Innendurchmesser des Körpers 8 vorgesehen ist und zwei Rastiermulden 29 und 30 definiert. Dabei gelangt die Rastiermulde 29 in der Neutralstellung des Schaltelements 7 mit der Kugel 26 axial in Überdeckung, wohingegen die Kugel 26 in der Schaltstellung des Schaltelements 7 über das Federelement 28 in die Rastiermulde 30 gedrückt wird. Hierdurch verhindert die Rastiereinrichtung 24, dass das Schaltelement 7, abgesehen von über die Schaltstifte 17 und 18 und die Schaltkulissen 15 und 16 jeweils hervorgerufenen axialen Bewegungen des Schaltelements 7, in der Neutralstellung bzw. in der Schaltstellung verbleibt.

Eine Schaltbewegung des Schaltelements 7 aus der, in Fig. 1A zu sehenden Neutralstellung heraus in die Schaltstellung und wieder zurück in die Neutralstellung soll nun im Folgenden unter Bezugnahme auf die Fig. 1A bis 1F beschrieben werden:
Um zunächst das Schaltelement 7 aus der in Fig. 1A dargestellten Neutralstellung in die Schaltstellung zu bewegen, in welcher die Klauenverzahnung 13 im Zahneingriff mit der Verzahnung 14 steht, wird zunächst in einem ersten Schritt der zweite Schaltstift 18 mittels des zugehörigen Aktuators 22 radial aus der in Fig. 1A dargestellten Grundstellung in eine, aus Fig. 1B hervorgehende Eingriffsstellung bewegt, in welcher der zweite Schaltstift 18 in die zweite Schaltkulisse 16 einfassen kann. Sollten sich die zweite Schaltkulisse 16 und der zweite Schaltstift 18 in Umfangsrichtung bei Ausfahren des Schaltstifts 18 nicht in Überdeckung befinden, so läuft der zweite Schaltstift 18 zunächst am Innendurchmesser des Schaltelements 7 an, bis er schließlich über den eingangsseitigen Übergangsbereich der zweiten Schaltkulisse 16 in diese hineingleiten kann. Im Folgenden bewirkt der in axialer Richtung veränderliche Verlauf der zweiten Schaltkulisse 16, dass aufgrund der festen Position des zweiten Schaltstifts 18 eine axiale Verschiebung des Schaltelements 7 erzwungen wird. Hierbei gleitet im Laufe dieser axialen Verschiebung auch die Kugel 26 aus der Rastiermulde 29 heraus.

Im Folgenden wird das Schaltelement 7 aus der in Fig. 1B dargestellten axialen Position in die, in Fig. 1C dargestellte Stellung verschoben, die der Schaltstellung des Schaltelements 7 entspricht. Auf dem Weg in diese Schaltstellung tritt dabei die Klauenverzahnung 13 des Schaltelements 7 in Zahneingriff mit der Verzahnung 14 des Kupplungskörpers 10, wobei ein hierbei ggf. auftretender, axialer Stoß über das Federelement 12 kompensiert wird. Allerdings ist ein Verlauf der zweiten Schaltkulisse 16 dabei so gewählt, dass ein sauberes Einspuren der Verzahnungen 13 und 14 stattfindet, also ein Zahn der Klauenverzahnung 13 zum Ende der Verschiebung des Schaltelements 7 in die Schaltstellung immer zwischen zwei Zähne der Verzahnung 14 fasst. Somit kann ein auftretender Stoß beim Einspuren gering gehalten werden. Über den ausgangsseitigen Übergangsbereich der zweiten Schaltkulisse 16 wird der zweite Schaltstift 18 ab Erreichen der Schaltstellung des Schaltelements 7 dann wieder aus der zweiten Schaltkulisse 16 heraus in die in Fig. 1D zu erkennende Grundstellung zurückbewegt wird.

In Fig. 1C und auch in Fig. 1D ist zudem die Kugel 26 in Überdeckung mit der Rastiermulde 30 gelangt, wodurch ein ungewolltes Verlassen der Schaltstellung des Schaltelements 7 unterbunden wird. In der Schaltstellung des Schaltelements 7 sind nun die Getriebewelle 2 und die Getriebewelle 5 durch das Schaltelement 7 und den Kupplungskörper 10 drehfest miteinander gekoppelt.

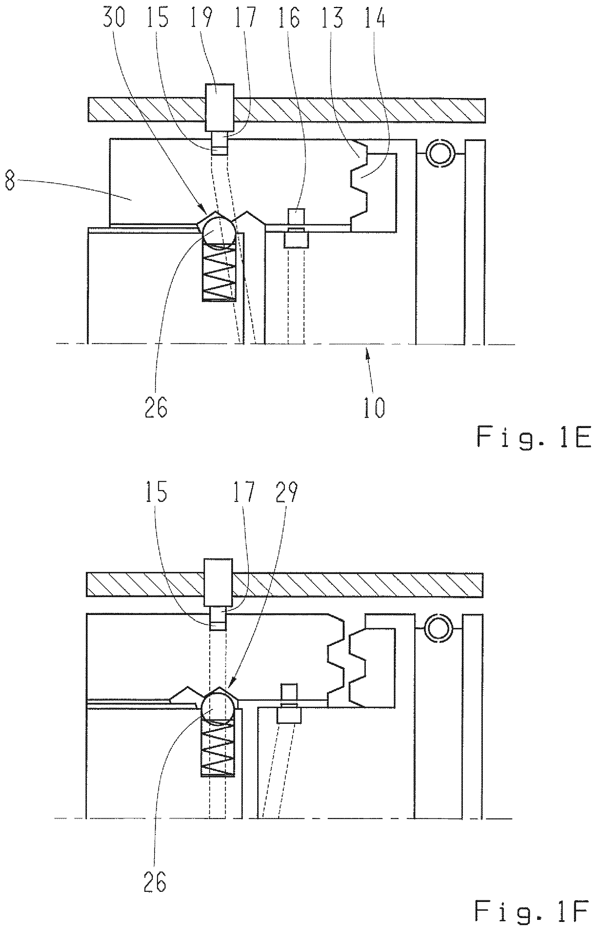

Zur Rückbewegung des Schaltelements 7 in seine Neutralstellung wird bei einem hierauf folgenden, in Fig. 1E dargestellten Schritt der erste Schaltstift 17 über den zugehörigen Aktuator 19 aus seiner Grundstellung in seine Eingriffsstellung radial ausgefahren und kann hierbei über den eingangsseitigen Übergangsbereich in die erste Schaltkulisse 15 einlaufen. Befinden sich hierbei erneut der eingangsseitige Übergangsbereich der ersten Schaltkulisse 15 und der erste Schaltstift 17 in Umfangsrichtung nicht in Überdeckung, so läuft der erste Schaltstift 17 zunächst am Außendurchmesser des Körpers 8 an und gelangt bei weiterer Verdrehung des Körpers 8 über den eingangsseitigen Übergangsbereich in die erste Schaltkulisse 15. Da die erste Schaltkulisse 15 hierbei gegensätzlich zur zweiten Schaltkulisse 16 verlaufend ausgestaltet ist, wird im Zusammenspiel mit der festen Position des ersten Schaltstifts 17 eine axiale Verschiebung des Schaltelements 7 in Richtung seiner Neutralstellung erzwungen, wobei hierbei die Kugel 26 aus der Rastiermulde 30 herausgleitet. Im Laufe der axialen Verschiebung wird dabei die Klauenverzahnung 13 von der Verzahnung 14 axial getrennt, so dass das Schaltelement 7 wiederum relativ zum Kupplungskörper 10 verdreht werden kann und dementsprechend auch die Getriebewellen 2 und 5 nicht mehr miteinander gekoppelt sind.

Schließlich erreicht das Schaltelement 7, wie in Fig. 1F dargestellt, wiederum seine Neutralstellung, wobei der erste Schaltstift 17 im Folgenden über den ausgangsseitigen Übergangsbereich der ersten Schaltkulisse 15 wieder in seine Grundstellung zurückgedrängt wird. Gleichzeitig kommt die Kugel 26 in Überdeckung mit der Rastiermulde 29. Somit wird wiederum der in Fig. 1A dargestellte Zustand erreicht.

Mittels der erfindungsgemäßen Ausgestaltung einer Getriebeschalteinrichtung können Schaltbewegungen eines Schaltelements 7 auf kompakte Art und Weise, sowie präzise und unabhängig gesteuert werden.

### Bezugszeichen

- 1: Getriebebauteil
- 2: Getriebewelle
- 3: Rotationsachse
- 4: Getriebebauteil
- 5: Getriebewelle
- 6: Mitnahmeverzahnung
- 7: Schaltelement
- 8: Körper
- 9: Verzahnung
- 10: Kupplungskörper
- 11: Körper
- 12: Feder-/ Dämpferelement
- 13: Klauenverzahnung
- 14: Verzahnung
- 15: erste Schaltkulisse
- 16: zweite Schaltkulisse
- 17: erster Schaltstift
- 18: zweiter Schaltstift
- 19: Aktuator
- 20: Getriebebauteil
- 21: Gehäuse
- 22: Aktuator
- 23: Wellenstummel
- 24: Rastiereinrichtung
- 25: Rastierkontur
- 26: Kugel
- 27: Bohrung
- 28: Federelement
- 29: Rastiermulde
- 30: Rastiermulde

## Patentansprüche

1. Getriebeschalteinrichtung für ein Getriebe, umfassend ein erstes, rotativ antreibbares Getriebebauteil (1), auf welchem drehfest und axial verschiebbar ein Schaltelement (7) mit einem ringförmigen Körper (8) angeordnet ist, das axial in zumindest eine Schaltstellung bewegbar ist, in welcher jeweils das erste Getriebebauteil (1) mit je einem benachbart zu diesem angeordneten und hieran anbindbaren Getriebebauteil (4) drehfest gekoppelt ist, wobei je eine axiale Schaltbewegung des Schaltelements (7) in die zumindest eine Schaltstellung und/oder aus dieser heraus durch Zusammenspiel jeweils eines Schaltstifts (17, 18) mit jeweils mindestens einer zugehörigen, nutartigen Schaltkulisse (15, 16) auslösbar ist, die in axialer Richtung zumindest abschnittsweise veränderlich gestaltet ist, wobei das Schaltelement (7) von einem weiteren Getriebebauteil (20), bei welchem es sich um ein Gehäuse (21) des Getriebes handelt, radial umgeben ist, **dadurch gekennzeichnet, dass** das Schaltelement (7) an seinem Innendurchmesser und an seinem Außendurchmesser die mindestens eine zugehörige Schaltkulisse (15, 16) aufweist, während der jeweils eine Schaltstift (17, 18) radial verschiebbar und der mindestens einen Schaltkulisse (15, 16) radial gegenüberliegend an dem benachbart zum Schaltelement (7) liegenden Getriebebauteil (4, 20), dem anbindbaren (4) und dem weiteren Getriebebauteil (20), angeordnet ist oder dass das Schaltelement an seinem Innendurchmesser und an seinem Außendurchmesser den jeweils einen Schaltstift radial verschiebbar aufnimmt, wohingegen die mindestens eine zugehörige Schaltkulisse dem jeweils einen Schaltstift radial gegenüberliegend an dem benachbart zum Schaltelement liegenden Getriebebauteil (4, 20), dem anbindbaren (4) und dem weiteren Getriebebauteil (20), ausgestaltet ist, und dass der jeweils eine Schaltstift (17, 18) über einen zugehörigen Aktuator (19, 22) jeweils radial zwischen einer Grundstellung und einer Eingriffsstellung bewegbar ist, in welcher der jeweils eine Schaltstift (17, 18) in die mindestens eine zugehörige Schaltkulisse (15, 16) einführbar ist.

2. Getriebeschalteinrichtung nach Anspruch 1, **dadurch gekennzeichnet, dass** radial zwischen dem Schaltelement (7) und dem ersten Getriebebauteil (1) mindestens eine Rastiereinrichtung (24) vorgesehen ist, welche, abgesehen von axialen Schaltbewegungen, axiale Bewegungen des Schaltelements (7) aus einer Neutralstellung und der zumindest einen Schaltstellung heraus verhindert.

## Claims

1. Gear shifting device for a transmission, comprising a first, rotationally drivable transmission component (1), on which a shifting element (7) with an annular body (8) is arranged axially displaceably and fixedly so as to rotate with it, which shifting element (7) can be moved axially into at least one shifting position, in which in each case the first transmission component (1) is coupled fixedly to in each case one transmission component (4) so as to rotate with it, which transmission component (4) is arranged adjacently with respect to the said first transmission component (1) and can be attached to it, it being possible for in each case one axial shifting movement of the shifting element (7) to be triggered into the at least one shifting position and/or out of the latter by way of an interaction of in each case one shifting pin (17, 18) with in each case at least one associated, groove-like shifting guide plate (15, 16) which is of variable design at least in sections in the axial direction, the shifting element (7) being surrounded radially by a further transmission component (20) which is a housing (21) of the transmission, **characterized in that** the shifting element (7) has the at least one associated shifting guide plate (15, 16) on its internal diameter and on its external diameter, whereas the in each case one shifting pin (17, 18) can be displaced radially and is arranged so as to lie radially opposite the at least one shifting guide plate (15, 16) on the transmission component (4, 20) which lies adjacently with respect to the shifting element (7), on the transmission component (4) which can be attached, and on the further transmission component (20), or **in that** the shifting element receives the in each case one shifting pin in a radially displaceable manner on its internal diameter and on its external diameter, whereas the at least one associated shifting guide plate is configured so as to lie radially opposite the in each case one shifting pin on the transmission component (4, 20) which lies adjacently with respect to the shifting element, on the transmission component (4) which can be attached, and on the further transmission component (20), and **in that** the in each case one shifting pin (17, 18) can be moved in each case radially via an associated actuator (19, 22) between a basic position and an engagement position, in which the in each case one shifting pin (17, 18) can be introduced into the at least one associated shifting guide plate (15, 16).

2. Gear shifting device according to Claim 1, **characterized in that** at least one latching device (24) is provided radially between the shifting element (7) and the first transmission component (1), which latching device (24) prevents axial movements of the shifting element (7) out of a neutral position and out of the at least one shifting position, apart from axial shifting movements.

## Revendications

1. Système de changement de vitesses pour une boîte de vitesses, comportant un premier composant de boîte de vitesses (1) pouvant être entraîné en rotation, sur lequel un élément de changement de vitesses (7) doté d'un corps annulaire (8) est disposé de manière solidaire en rotation et axialement mobile, lequel élément de changement de vitesses est déplaçable axialement dans au moins une position de changement de vitesses dans laquelle le premier composant de boîte de vitesses (1) est respectivement accouplé de manière solidaire en rotation à un composant de boîte de vitesses (4) respectif disposé de manière adjacente à celui-ci et pouvant être relié à celui-ci, un mouvement de changement de vitesses axial de l'élément de changement de vitesses (7) dans ladite au moins une position de changement de vitesses et/ou hors de celle-ci pouvant respectivement être déclenché par l'interaction respectivement d'une tige de changement de vitesses (17, 18) avec respectivement au moins une coulisse de changement de vitesses (15, 16) associée en forme de rainure, laquelle coulisse est conçue, au moins dans certaines zones, de manière variable dans la direction axiale, l'élément de changement de vitesses (7) étant entouré radialement par un autre composant de boîte de vitesses (20), lequel est un carter (21) de la boîte de vitesses, **caractérisé en ce que** l'élément de changement de vitesses (7) comprend ladite au moins une coulisse de changement de vitesses (15, 16) associée sur son diamètre intérieur et sur son diamètre extérieur, tandis que la tige de changement de vitesses (17, 18) respective est disposée de manière radialement mobile et ladite au moins une coulisse de changement de vitesses (15, 16) est disposée radialement en regard sur le composant de boîte de vitesses (4, 20) situé de manière adjacente à l'élément de changement de vitesses (7), à savoir le composant de boîte de vitesses (4) pouvant être relié et l'autre composant de boîte de vitesses (20), ou **en ce que** l'élément de changement de vitesses reçoit de manière mobile radialement, sur son diamètre intérieur et sur son diamètre extérieur, la tige de changement de vitesses respective, alors que ladite au moins une coulisse de changement de vitesses associée est réalisée de manière radialement en regard de la tige de changement de vitesses respective sur le composant de boîte de vitesses (4, 20) situé de manière adjacente à l'élément de changement de vitesses, à savoir le composant de boîte de vitesses (4) pouvant être relié et l'autre composant de boîte de vitesses (20), et **en ce que** la tige de changement de vitesses (17, 18) respective est déplaçable, par le biais d'un actionneur (19, 22) associé, respectivement radialement entre une position de base et une position d'entrée en prise dans laquelle la tige de changement de vitesses (17, 18) respective peut être introduite dans ladite au moins une coulisse de changement de vitesses (15, 16) associée.

2. Système de changement de vitesses selon la revendication 1, **caractérisé en ce qu'**au moins un dispositif d'arrêt (24) est prévu radialement entre l'élément de changement de vitesses (7) et le premier composant de boîte de vitesse (1), lequel dispositif d'arrêt empêche, outre des déplacements de changement de vitesses axiaux, des déplacements axiaux de l'élément de changement de vitesses (7) hors d'une position neutre et de ladite au moins une position de changement de vitesses.
